Europäisches Patentamt

European Patent Office

Office européen des brevets

(19)

(11) EP 0 879 639 A1

(12) EUROPEAN PATENT APPLICATION

(43) Date of publication:
25.11.1998 Bulletin 1998/48

(51) Int Cl.6: **B01J 8/18**, B01J 8/24, B01J 8/44

(21) Application number: 98303856.3

(22) Date of filing: 15.05.1998

(84) Designated Contracting States:
AT BE CH CY DE DK ES FI FR GB GR IE IT LI LU MC NL PT SE
Designated Extension States:
AL LT LV MK RO SI

(30) Priority: 20.05.1997 JP 129897/97

(71) Applicant: MITSUI CHEMICALS, INC.
Tokyo (JP)

(72) Inventors:
• Okano, Toshihiro
  Ichihara-Shi, Chiba-Ken (JP)

• Iwatsuki, Kouhei
  Ichihara-Shi, Chiba-Ken (JP)
• Kikucki, Yoshiaki
  Ichihara-Shi, Chiba-Ken (JP)
• Yamamoto, Ryoichi
  Ichihara-Shi, Chiba-Ken (JP)
• Ohtani, Satoru
  Ichihara-Shi, Chiba-Ken (JP)

(74) Representative: Senior, Alan Murray
J.A. KEMP & CO.,
14 South Square,
Gray's Inn
London WC1R 5LX (GB)

(54) **Gaseous phase polymerising apparatus**

(57) The present invention is to prevent stagnation, adhesion, or growth of a powdery polymer below a gas dispersing plate of a gaseous phase polymerizer, and therefore can prevent thr choking of the gas dispersing plate with the powdery polymer. An inclined member (2) is provided below the gas dispersing plate (9) of the polymerizer (1) for distributing the flow of the gaseous phase toward the gas dispersing plate along the inner wall surface (1b) of the polymerizer. The inclined member having an inclined upper surface.

F I G 1

## Description

The present invention relates to a gaseous phase polymerizer, more specifically to a gaseous phase polymerizer, which is a main component of a gaseous phase polymerizing apparatus for generating a powder-like polymer (hereinafter referred to as a "powdery polymer") by the polymerization reaction of a monomer and/or a comonomer, which is a material for a polymer in the gaseous phase, with a solid polymerization catalyst and another gaseous phase necessary for the polymerization.

As an example of a common gaseous phase polymerizing apparatus, a fluidized bed type having a gas dispersing plate in the gaseous phase polymerizer can be presented.

In the fluidized bed type gaseous phase polymerizing apparatus, a monomer or a gas containing a monomer (hereinafter these will be referred to simply as a "gas" unless otherwise specified) is introduced to the lower portion of a gas polymerizer using a gas introducing tube, and the introduced gas is homogeneously dispersed in the gaseous phase polymerizer by a gas dispersing plate having a large number of holes. The gas dispersing plate is provided at the lower portion of the gaseous phase polymerizer.

The homogeneously-dispersed gas ascends in the gaseous phase polymerizer so that a constant fluidized bed (fluidized layer) is formed by the ascending gas flow while the powders such as a powdery polymer already formed by the polymerization reaction, a solid polymerization catalyst, and the like are being fluidized. At the fluidized bed, a monomer in the gaseous phase and powders such as a solid polymerization catalyst and the like can contact with each other for the polymerization to generate a powdery polymer. The thickness of the fluidized bed can be controlled by the gas flow and the like.

A gas discharging tube for discharging a gas from the gaseous phase polymerizer is connected to the upper portion of the gaseous phase polymerizer.

The gas introducing tube and the gas discharging tube construct a gaseous phase circulating system (such as a circular tube path) for circulating a gas in the gaseous phase polymerizer. The gaseous phase circulating system is provided with a gas circulator such as a compressor, a blower and the like.

The gas circulator is a device for flowing a gas via the gaseous phase circulating system, that is, a device for sending a taken-out gas in the unreacted state taken out from the gaseous phase polymerizer and a gas supplied as needed to the gaseous phase polymerizer.

On the other hand, a gas which has not been used for the polymerization in the gaseous phase polymerizer is discharged from the gaseous phase polymerizer via the gas discharging tube. After circulating in the gaseous phase circulating system, the discharged gas is sent into the gaseous phase polymerizer again from the gas introducing tube so as to be provided for the polymerization reaction again.

Naturally, polymer materials, such as a monomer, a comonomer, a solid polymerization catalyst and the like are to be added for compensating for the amount reduced by the polymerization reaction.

Any gas can be used for a gas containing a monomer or a comonomer and a circulating gas to be supplied here as long as it can form a fluidized layer, and can partially include a liquid phase.

When the reaction heat is large, an easily-volatile and condensing medium which is inert to the polymerization of propane, butane and the like, can be included.

The gaseous phase polymerizer comprises a polymer discharging tube for discharging the powdery polymer generated in the gaseous phase polymerizer to the outside of the gaseous phase polymerizer.

The polymer discharging tube is connected to a settling equipment for temporarily storing the powdery polymer discharged from the gaseous phase polymerizer via the polymer discharging tube in the precipitated state.

The settling equipment refers to a container such as a settling tank, a settling drum, and the like. Hereinafter the settling equipment will be referred to as a settling tank unless otherwise specified.

The powdery polymer conveyed to the settling tank is accompanied with an unreacted monomer and other gases which have not been used in the polymerization reaction (it includes powders such as a solid polymerization catalyst, and the like). Therefore, not only the powdery polymer but also the unreacted monomer and other gases enter the settling tank.

The powdery polymer and the gases which have entered the settling tank are separated to a powdery polymer layer precipitated in the settling tank and a gas layer to be accumulated thereon.

The gases in the gas layer can be used in the polymerization. Therefore, the upper portion of the settling tank is connected to the gaseous phase polymerizer via a degassing connecting tube, a recycle blower, and the like so that at least a portion of the gases in the gas layer can be returned to the gaseous phase polymerizer via the degassing connecting tube to be reused.

A gas dispersing plate having a large number of minute holes is attached inside the gaseous phase polymerizer at the bottom side. The upper portion of the gaseous phase polymerizer with respect to the gas dispersing plate is referred to as a reaction chamber and the lower portion is referred to as a gas chamber.

The gas introducing tube is connected to the gas chamber. A gas sent to the gaseous phase polymerizer via the gas introducing tube passes through the gas chamber and is dispersed and distributed in the reaction chamber via the large number of the minute holes in the gas dispersing plate so as to be provided for the polymerization as mentioned above.

The powdery polymer generated in the reaction chamber of the gaseous phase polymerizer forms a fluidized layer on the gas dispersing plate by the gas so as to be sent to the settling tank continuously or intermittently via the polymer discharging tube.

In the fluidized layer type gaseous phase polymerizing method, it is preferable that all of the a solid catalyst, a generated polymer, and the like exist in the fluidized layer and are taken out therefrom. However, a solid catalyst produced by pulverization of particles and a generated polymer, and the like may jump out from the fluidized layer so as to be introduced to a gas circular line via a decelerating area positioned at the upper portion of the fluidized layer.

The solid catalyst or the powdery polymer accordingly introduced to the gaseous phase circulating system often reaches the gas chamber of the gaseous phase polymerizer again. Then, the solid catalyst or the powdery polymer may be fixed to the inner wall surface of the gas chamber by being precipitated to stagnate or adhere. Since the solid catalyst or the powdery polymer in most cases still has the activity and thus if the solidified polymer is left as it is, it reacts with an existing monomer. Therefore, powders can be grown or the powdery polymer can be melted. In the extreme case, even if the solid catalyst or the powdery polymer has no activity, they can be united with each other, or grow, or adhere to the particles having the activity to facilitate the growth in the reaction container.

If an aggregated polymer or a sheet-like polymer is generated, it is extremely difficult to eliminate it. Since the gaseous phase polymerizing apparatus needs to be stopped for a long time in order to eliminate the polymer, it will result in the productivity decline.

In order to prevent this, a baffle plate is provided in the gas chamber for evenly distributing the gas flow to the gas dispersing plate and for forming a turbulent flow out of the gas flow below the gas dispersing plate.

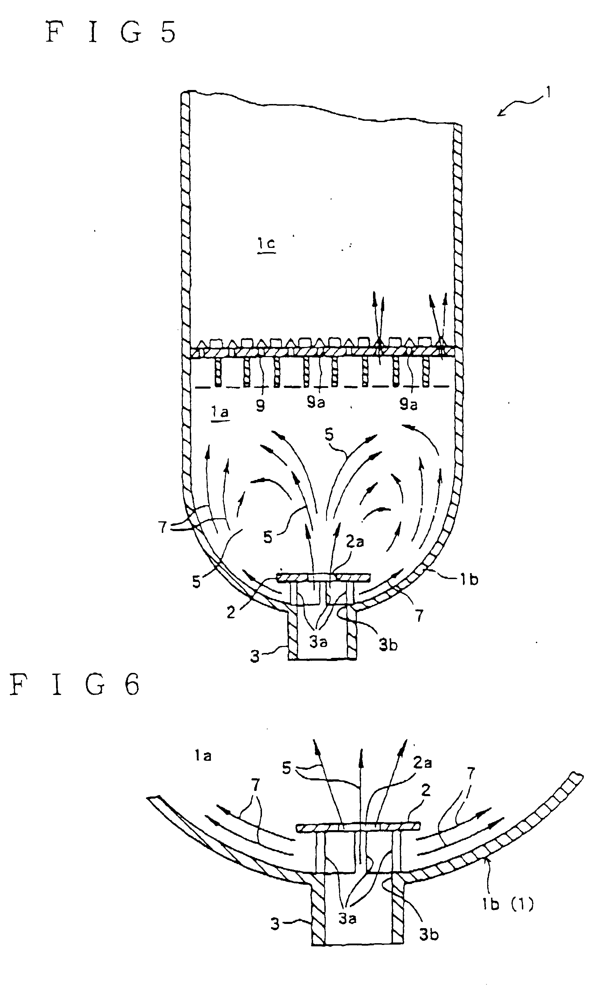

FIGS. 5 and 6 partially show an example of a gaseous phase polymerizing apparatus provided with a baffle plate, for example, disclosed in the official gazette of Japanese patent Application Laid Open (JP-A) No. 61-106608.

A baffle plate 2 of a gaseous phase polymerizer 1 is a horizontal plate which is a certain distance away from the lowermost portion of the gaseous phase polymerizer 1. The baffle plate 2 is supported by a tip portion of a gas introducing tube 3. The tip portion is a portion of the gaseous phase circulating system and is provided inside the gaseous phase polymerizer 1.

A hole 2a is formed at the center portion of the baffle plate 2. The tip of the gas introducing tube 3 contacts with the back surface of the baffle plate 2 so as to surround the hole 2a. A plurality of vertical slits 3a, 3a, ..., are provided in the tip portion of the gas introducing tube 3. These slits 3a, 3a,... formed in the tip portion are arranged at appropriate intervals (for example, an equal interval) along the periphery of the gas introducing tube 3.

Therefore, as shown in FIGS. 5 and 6, a gas sent to the gaseous phase polymerizer 1 from the gas introducing tube 3 passes through the center hole 2a of the baffle plate 2 and the slits 3a, 3a, ... and makes a center upward flow shown by the arrow 5 and a peripheral circulating flow shown by the arrow 7 so as to circulate in the gas chamber 1a below the gas dispersing plate 9 of the gaseous phase polymerizer 1.

More specifically, the center upward flow 5 makes a flow from the center hole 2a of the baffle plate 2 radially falling into the periphery of the hole 2a like a fountain, and the peripheral circulating flow 7 makes a flow radially forming a circular arc along the inner wall surface of a hemispheric bottom portion 1b of the gaseous phase polymerizer 1 via the slits 3a, 3a, ..., from a hole 3b of the gas introducing tube 3 as the origin. That is, the hole 3b is the introduction opening to the gaseous phase polymerizer 1.

As a result, both flows mix with each other so that the powdery polymer can reach a reaction chamber 1c of the gaseous phase polymerizer 1 again from minute holes 9a of the gas dispersing plate 9 without precipitating to stagnate or adhere on the inner wall surface of the gas chamber 1a.

The baffle plate 2 is attached horizontally, and thus a swirl is liable to be generated by a gas flow in the vicinity of the outer periphery of the baffle plate. It is known from the past experiences that the powdery polymer stagnates or adheres in the vicinity of the outer periphery so as to grow and aggregate due to the influence of the swirl.

The reason thereof is that when the powdery polymer grows and fixes to the baffle plate 2, the inherent fluidized state cannot be obtained and the polymer adheres and grows on the inner wall surface of the gaseous phase polymerizer 1. Therefore, it has been desired that the powdery polymer does not grow on the baffle plate 2.

Furthermore, the grown powdery polymer can peel off and fly up by the center upward flow 5 or the peripheral circulating flow 7. As a result, choked is the minute holes 9a of the gas dispersing plate 9.

In order to solve the above-mentioned conventional problems, a technological object of the present invention is to prevent a powdery polymer stagnation, adherence and growth on a baffle plate, and choking of minute holes of a gas dispersing plate by a grown and enlarged powdery polymer.

A gaseous phase polymerizing apparatus of the present invention comprises a gaseous phase circulating system for taking out unreacted monomer and other gaseous phases which have not been used for the polymerization reaction in a polymerizer for a gaseous phase polymerization to generate a powdery polymer by the polymerization reaction in a gaseous phase using a solid polymerization catalyst so as to supply said taken out unreacted monomer and other gaseous phases to the polymerizer again, wherein the polymerizer accommodates a gas dispersing plate for diffusing and distributing a gaseous phase sent from the circulating system into the polymerizer, and an inclined member having an inclined upper surface, provided below the gas dispersing plate for distributing the flow of the gaseous phase toward the dispersing plate along the inner wall surface of the polymerizer. The "upper surface" herein refers to a portion of the inclined member where the powdery polymer precipitates.

According to the gaseous phase polymerizing apparatus of the present invention, even if the powdery polymer precipitates on the inclined member, since the upper surface of the inclined member has an inclined shape, the powdery polymer slips off from the upper surface and is blown up by a gas from below and thus does not stagnate thereat.

Besides, the gaseous phase sent to the introduction opening of the gaseous phase polymerizer from the gaseous phase circulating system moves toward the gas dispersing plate while being distributed along the inner wall surface of the gaseous phase polymerizer by the inclined member. At the time, a portion of the flow can be a swirl depending on the inclination degree of the upper surface of the inclined member. A swirl flow of the swirl formed along the upper surface of the inclined member inhibits the stagnation of the precipitated powdery polymer on the inclined member upper surface in combination with the inclination degree of the upper surface of the inclined member. Therefore, stagnation, adhesion and growth of the powdery polymer can be effectively prevented. As a result, since the powdery polymer does not get large on the inclined member, minute holes of the gas dispersing plate of the gaseous phase polymerizer cannot be choked with the powdery polymer.

Further, the inclined member can have a conical shape. As the conical shape, a circular cone or a pyramid (in particular, a polygonal pyramid substantially close to a circular cone is preferable) are preferable. In this case, the inclined member having the circular cone or pyramid shape may be a member having an upper conical portion and a lower flat conical portion where a portion corresponding to the bottom surface of the upper conical portion projects downward. In this case, it is preferable to have the below-mentioned dimensions (1) to (3).

(1) The vertical angle $\theta_1$ of the vertical cross-section of the upper conical portion and the vertical angle $\theta_2$ of the vertical cross-section of the lower flat conical portion are $\theta_1 = 80°$ to $120°$, and $\theta_2 = 120°$ to $160°$.
(2) The maximum diameter size D2 of the inclined member is D2 = 1.1 x D1 to 1.5 x D1, wherein D1 represents the inner diameter of the introduction tube of the gaseous phase circulating system to the polymerizer.
(3) The distance H between the inclined member and the gaseous phase polymerizer bottom portion is $H = (0.8 \text{ to } 1.2) \times (D1^2 \times \pi/4)/(D2 \times \pi)$.

Furthermore, a side of the inclined member in the vertical cross-section may be a concave arc-like curved line, a convex arc-like curved line, or a straight line. Specifically, it is preferable that the entire shape of the inclined member is a polygonal pyramid, a dome-like shape, or a trumpet-like shape. Here the "trumpet-like shape" refers to a shape corresponding to a bell of a wind instrument.

The invention is described below with reference to exemplary embodiments and the accompanying drawings, in which:-

FIG. 1 is a schematic diagram of a polymerizer for a gaseous phase polymerization according to the present invention.

FIG. 2 is a vertical cross-sectional view of a modified embodiment of an inclined member of a gaseous phase polymerizer according to the present invention.

FIG. 3 is a vertical cross-sectional view of another embodiment of an inclined member of a gaseous phase polymerizer according to the present invention.

FIG. 4 is a vertical cross-sectional view of yet another embodiment of an inclined member of a gaseous phase polymerizer according to the present invention.

FIG. 5 is a schematic diagram for explaining a conventional technology.

FIG. 6 is a partially-enlarged view of FIG. 5.

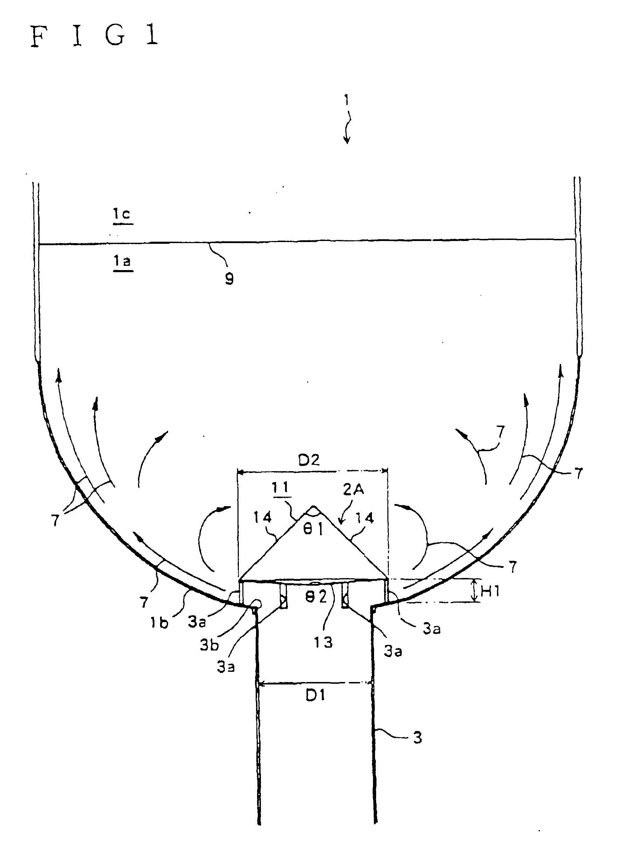

Hereinafter a gaseous phase polymerizing apparatus according to the present invention will be explained in detail with reference to the embodiments shown in the accompanied drawings. FIG. 1 is a schematic diagram for explaining a polymerizer for a gaseous phase polymerization according to the present invention. Since the gaseous phase polymerizer according to the present invention differs from the gaseous phase polymerizer described in the related art section only in an inclined member corresponding to the baffle plate 2 of the conventional gaseous phase polymerizer and the portion related thereto, the same portions bear the same reference and further explanation will not be given herein.

An inclined member 2A of a gaseous phase polymerizer 1 is provided below a gas dispersing plate 9.

The inclined member 2A is a device having a hollow and closed conical shape, for distributing the flow of a gaseous phase (as mentioned above, it refers to unreacted monomer and other gaseous phases, which have not been used for the polymerization reaction in the gaseous phase polymerizer 1) sent to an introduction opening 3b of the gaseous phase polymerizer from a gas introduction tube 3, which is a portion of the gaseous phase circulating system, toward a gas dispersing plate 9 along the inner wall surface of a hemispheric bottom portion 1b of the gaseous phase polymerizer 1.

In this embodiment, the inclined member 2A comprises an upper circular conical portion 11 and a lower flat conical portion 13 where the portion corresponding to the bottom surface of the upper circular conical portion 11 projects downward, and is a conical member provided with the below-mentioned dimensions.

(1) The upper conical portion 11 has a vertical cross-section of an isosceles triangle with the vertical angle $\theta 1$ of 90°. The lower flat conical portion 13 also has a vertical cross-section of an isosceles triangle with the vertical angle $\theta 2$ of 150°. The angles are not limited thereto but $\theta 1$ can be set within the range from 80° to 120°, and $\theta 2$ can be set within the range from 120° to 160°.

(2) The maximum diameter size D2 (see FIG. 1) of the inclined member is 1.3 x D1.

However, D1 represents the inner diameter of the tube comprising the gaseous phase circulating system, and the value of D2 is not limited to the above-mentioned but can be in the range from 1.1 x D1 to 1.5 x D1.

(3) The distance H1 between the inclined member and the gaseous phase polymerizer bottom portion can be sought by the below-mentioned formula (1), where the coefficient k is 1.0.

$$H1 = k \times (D1^2 \times \pi/4)/(D2 \times \pi) \qquad (1)$$

The coefficient k is not less than 0.8 but not more than 1.2.

In FIG. 1, reference 14 represents the upper surface of the inclined member 2A (the substantial circular conical surface of the upper circular conical portion 11). On the upper surface 14, a powdery polymer introduced from the introduction opening 3b of the gaseous phase polymerizer 1 and blown up by the peripheral circulating flow 7 is to be precipitated. Moreover, it is preferable that the upper surface 14 is applied with a bug finishing (mirror-like finishing) since it facilitates the slip-off of the powdery polymer accumulated on the upper surface 14.

The upper surface 14 is provided with a plurality of, or at least two, holes (not illustrated) with an even thickness. The inclined member 2A is provided with a purge line (not illustrated) with a monomer, for example, ethylene, that is, a slight pressure is provided so as to prevent the entrance of the powdery polymer into the inclined member 2A through the plurality of the holes.

The shape of the inclined member 2 is not limited to the above-mentioned but can have shapes mentioned below.

(Modified embodiment 1)

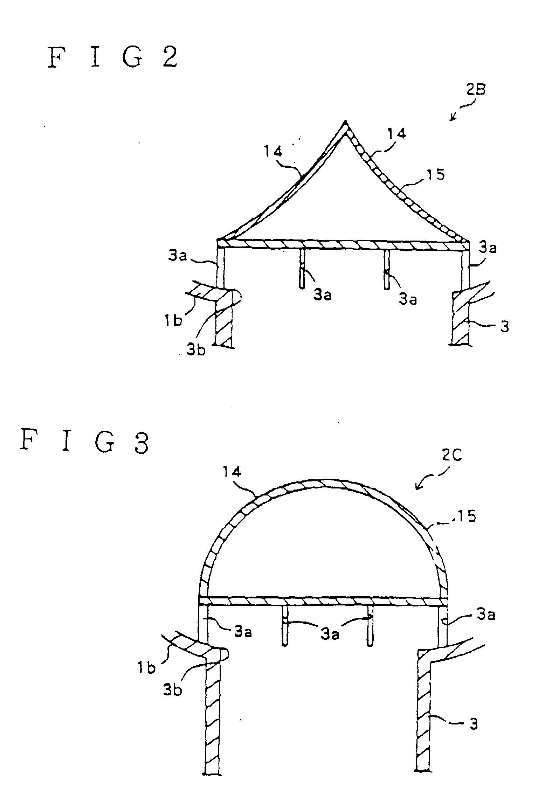

As shown in FIG. 2, a side 15 of an inclined member 2B in the vertical cross-section can be a concave arc-like curved line. The entire shape of the inclined member 2B in this case is a trumpet-like shape, which corresponds to a bell of a wind instrument.

(Modified embodiment 2)

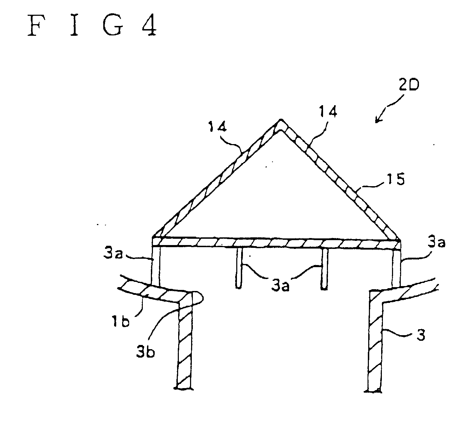

As shown in FIG. 3, a side 15 of an inclined member 2C in the vertical cross-section can be a convex arc-like curved line. The entire shape of the inclined member 2C in this case is a dome-like shape.

(Modified embodiment 3)

As shown in FIG. 4, a side 15 of an inclined member 2D in the vertical cross-section can be a straight line. The entire shape of the inclined member 2D in this case is a circular conical shape.

In addition to them, the entire shape of the inclined member can be a polygonal pyramid substantially close to a circular cone.

(Operations of the embodiments)

In the gaseous phase polymerizer 1 provided with cone of inclined members 2A to 2D thus constructed, even if the powdery polymer precipitates on the one of the inclined members 2A to 2D, since the upper surface 14 of the one of the inclined members 2A to 2D is inclined, the powdery polymer slips off from the upper surface 14 without stagnation. Therefore, the powdery polymer does not aggregate on the upper surface 14.

Besides, a gaseous phase sent to the introduction opening 3b of the gaseous phase polymerizer 1 from the gaseous phase circulating system moves toward the gas dispersing plate 9 while being distributed along the inner wall surface of the gaseous phase polymerizer 1 by the one of the inclined members 2A to 2D. At the time, a portion of the flow can be a swirl depending on the inciination degree of the upper surface 14 of the one of the inclined members 2A to 2D. A swirl flow of the swirl formed along the upper surface 14 of the one of the inclined members 2A to 2D inhibits the stagnation of the precipitated powdery polymer on the inclined member upper surface 14 in combination with the inclination degree of the upper surface 14 of the one of the inclined members 2A to 2D. Therefore, stagnation, adhesion and growth of the powdery polymer can be effectively prevented. As a result, since the powdery polymer does not get large in the gas chamber la, the minute holes of the gas dispersing plate 9 of the gaseous phase polymerizer 1 cannot be choked with the powdery polymer.

**Claims**

1. A gaseous phase polymerizing apparatus for generating a powdery polymer by a polymerization reaction in a gaseous phase in a polymerizer using a solid polymerization catalyst, the apparatus comprising a gaseous phase circulating system for taking out unreacted monomer and other gaseous phases which have not been used in the polymerization reaction so as to supply said taken out unreacted monomer and other gaseous phases to the polymerizer again, wherein the polyermizer accommodates

    a gas dispersing plate for diffusing and distributing a gaseous phase sent from the circulating system into the polymerizer, and

    an inclined member having an inclined upper surface, provided below the gas dispersing plate for distributing the flow of the gaseous phase toward the dispersing plate along the inner wall surface of the polymerizer.

2. A gaseous phase polymerizing apparatus according to claim 1, wherein the inclined member has a conical shape.

3. A gaseous phase polymerizing apparatus according to claim 1, wherein a side of the inclined member in the vertical cross-section is one of a concave arc-like curved line, a convex arc-like curved line, and a straight line.

4. A gaseous phase polymerizing apparatus according to claim 3, wherein the entire shape of the inclined member is one of a polygonal pyramid, a dome-like shape, and a trumpet-like shape.

5. A gaseous phase polymerizing apparatus according to claim 2, wherein the entire shape of the inclined member is one of a circular conical shape and a pyramid shape.

6. A gaseous phase polymerizing apparatus according to claim 5, wherein the inclined member has an upper conical portion and a lower flat conical portion where a portion corresponding to the bottom surface of the upper conical portion projects downward, and has the below-mentioned dimensions (1) to (3):

    (1) the vertical angle $\theta 1$ of the vertical cross-section of the upper conical portion and the vertical angle $\theta 2$ of the vertical cross-section of the lower flat conical portion are $\theta 1 = 80°$ to $120°$, and $\theta 2 = 120°$ to $160°$;

    (2) the maximum diameter size D2 of the inclined member is $D2 = 1.1 \times D2$ to $1.5 \times D1$, wherein D1 represents the inner diameter of an introduction tube of the gaseous phase circulating system to the polymerizer; and

    (3) the distance H between the inclined member and the gaseous phase polymerizer bottom portion is $H = (0.8$ to $1.2) \times (D1^2 \times \pi/4)/(D2 \times \pi)$.

EP 0 879 639 A1

F I G 1

7

FIG 2

FIG 3

F I G 4

F I G 5

F I G 6

| | European Patent Office | **EUROPEAN SEARCH REPORT** | Application Number |
|---|---|---|---|
| | | | EP 98 30 3856 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,X | US 4 877 587 A (RHEE SEUNG J ET AL) 31 October 1989 | 1-4 | B01J8/18 B01J8/24 B01J8/44 |
| A | * column 2, line 46 - column 3, line 6 * <br> * column 3, line 40 - column 6, line 19 * <br> * column 9, line 48 - column 10, line 14 * <br> * column 15, line 57 - column 16, line 26 * <br> * figures 1-3,5-8 * | 5,6 | |
| X | US 5 627 243 A (HAEAELAEINEN MATTI ET AL) 6 May 1997 | 1,2,4 | |
| A | * column 2, line 44 - column 4, line 38 * <br> * figures 1-3,5 * | 5,6 | |
| A | US 2 876 079 A (UPCHURCH E.F.) 3 March 1959 <br> * column 3, line 12 - line 35 * <br> * column 4, line 7 - line 17 * <br> * figures 1-3 * | 1,3 | |
| A | US 2 690 962 A (CLARKE J.S.) 5 October 1954 <br> * column 3, line 67 - column 4, line 15 * <br> * figure 1 * | 1,2 | TECHNICAL FIELDS SEARCHED (Int.Cl.6) <br><br> B01J |
| A | US 4 518 750 A (GOVONI GABRIELE ET AL) 21 May 1985 <br> * column 1, line 53 - column 2, line 36 * <br> * figures 1-5 * | 1,2 | |
| A | US 4 140 625 A (JENSEN ROBERT H) 20 February 1979 <br> * abstract; figures 1,5-11 * | 1 | |
| A | US 4 702 891 A (LI ALLEN S ET AL) 27 October 1987 <br> * abstract; figures 1-4 * | 1,3,4 | |

The present search report has been drawn up for all claims

| Place of search | Date of completion of the search | Examiner |
|---|---|---|
| THE HAGUE | 17 August 1998 | Vlassis, M |